# EUROPEAN PATENT APPLICATION

(11) **EP 4 651 532 A1**
(43) Date of publication of application: **19.11.2025**
(21) Application number: 23915379.4
(22) Date of filing: 13.01.2023
(51) Int. Cl.: H04W 8/24

(54) **WIRELESS COMMUNICATION METHODS AND APPARATUSES**

(71) Applicant: Quectel Wireless Solutions Co., Ltd., Shanghai 201601 (CN)
(72) Inventor: LYU, Ling, Shanghai 201601 (CN); ZHAO, Zheng, Shanghai 201601 (CN); YANG, Zhongzhi, Shanghai 201601 (CN)
(74) Representative: Fish & Richardson P.C.
(86) International application number: PCT/CN2023/072157
(87) International publication number: WO 2024/148610

(57) **Abstract**

A wireless communication method and apparatus are provided. The method includes: sending, by a terminal device, multiple pieces of reference information to a network device according to configuration information. The multiple pieces of reference information are related to a transmission delay of the terminal device, and the multiple pieces of reference information are configured to determine position information of the terminal device.

## Description

### TECHNICAL FIELD

The present disclosure relates to the field of communication technology, and specifically to a wireless communication method and apparatus.

### BACKGROUND

A network device may determine position information of a terminal device based on multiple pieces of information related to a transmission delay of the terminal device. However, there is currently no clear regulation on how the terminal device sends the information related to the transmission delay.

### SUMMARY

Embodiments of the present disclosure provide a wireless communication method and apparatus. Several aspects involved in the embodiments of the present disclosure are introduced below.

In a first aspect, a wireless communication method is provided. The method includes: sending, by a terminal device, multiple pieces of reference information to a network device according to configuration information. The multiple pieces of reference information are related to a transmission delay of the terminal device, and are configured to determine position information of the terminal device.

In a second aspect, a wireless communication method is provided. The method includes: receiving, by a network device, multiple pieces of reference information sent by a terminal device. The multiple pieces of reference information are sent according to configuration information, are related to a transmission delay of the terminal device, and are configured to determine position information of the terminal device.

In a third aspect, a terminal device is provided. The terminal device includes a sending unit configured to send multiple pieces of reference information to a network device according to configuration information. The multiple pieces of reference information are related to a transmission delay of the terminal device, and are configured to determine position information of the terminal device.

In a fourth aspect, a network device is provided. The network device includes a receiving unit configured to receive multiple pieces of reference information sent by a terminal device. The multiple pieces of reference information are sent according to configuration information, are related to a transmission delay of the terminal device, and are configured to determine position information of the terminal device.

In a fifth aspect, a terminal device is provided. The terminal device includes a memory, a processor and a communication interface. The memory is configured to store programs, and the processor is configured to call the programs in the memory to cause the terminal device to perform the method described in the first aspect.

In a sixth aspect, a network device is provided. The network device includes a memory, a processor and a communication interface. The memory is configured to store programs, and the processor is configured to call the programs in the memory to cause the network device to perform the method described in the second aspect.

In a seventh aspect, an apparatus is provided. The apparatus includes a processor configured to call programs in a memory to perform the method described in the first aspect.

In an eighth aspect, an apparatus is provided. The apparatus includes a processor configured to call programs in a memory to perform the method described in the second aspect.

In a ninth aspect, a chip is provided. The chip includes a processor configured to call programs in a memory to cause a device equipped with the chip to perform the method described in the first aspect.

In a tenth aspect, a chip is provided. The chip includes a processor configured to call programs in a memory to cause a device equipped with the chip to perform the method described in the second aspect.

In an eleventh aspect, a computer-readable storage medium is provided. The computer-readable storage medium stores programs for causing a computer to perform the method described in the first aspect.

In a twelfth aspect, a computer-readable storage medium is provided. The computer-readable storage medium stores programs for causing a computer to perform the method described in the second aspect.

In a thirteenth aspect, a computer program product is provided. The computer program product includes programs for causing a computer to perform the method described in the first aspect.

In a fourteenth aspect, a computer program product is provided. The computer program product includes programs for causing a computer to perform the method described in the second aspect.

In a fifteenth aspect, a computer program is provided. The computer program, when executed by a computer, causes the computer to perform the method described in the first aspect.

In a sixteenth aspect, a computer program is provided. The computer program, when executed by a computer, causes the computer to perform the method described in the second aspect.

In the embodiments of the present disclosure, the terminal device can send the reference information related to the transmission delay to the network device according to the configuration information, therefore it is provided a clear solution for the terminal device to send information related to the transmission delay.

### BRIEF DESCRIPTION OF THE DRAWINGS

FIG. 1 is a schematic structural diagram of a communication system applicable to embodiments of the present disclosure.
FIG. 2 is a schematic diagram illustrating an architecture of a satellite communication system.
FIG. 3 is a schematic diagram illustrating a manner of determining a transmission delay by a terminal device.
FIG. 4 is a schematic flowchart of sending a transmission delay by a terminal device.
FIG. 5 is a schematic flowchart of a wireless communication method according to an embodiment of the present disclosure.
FIG. 6 is a schematic flowchart of periodically sending reference information by a terminal device according to an embodiment of the present disclosure.
FIG. 7 is a schematic flowchart of centrally reporting multiple pieces of reference information by a terminal device according to an embodiment of the present disclosure.
FIG. 8 is a schematic diagram of content of a message sent by a terminal device to a network device according to an embodiment of the present disclosure.
FIG. 9 is a schematic flowchart of indicating ephemeris information by a network device according to an embodiment of the present disclosure.
FIG. 10 is a schematic flowchart of reporting reference information by a terminal device when inter-cell handover occurs according to an embodiment of the present disclosure.
FIG. 11 is a schematic block diagram of a terminal device according to an embodiment of the present disclosure.
FIG. 12 is a schematic block diagram of a network device according to an embodiment of the present disclosure.
FIG. 13 is a schematic structural diagram of an apparatus according to an embodiment of the present disclosure.

### DETAILED DESCRIPTION OF THE EMBODIMENTS

The following describes the technical solution in the present disclosure with reference to the accompanying drawings.

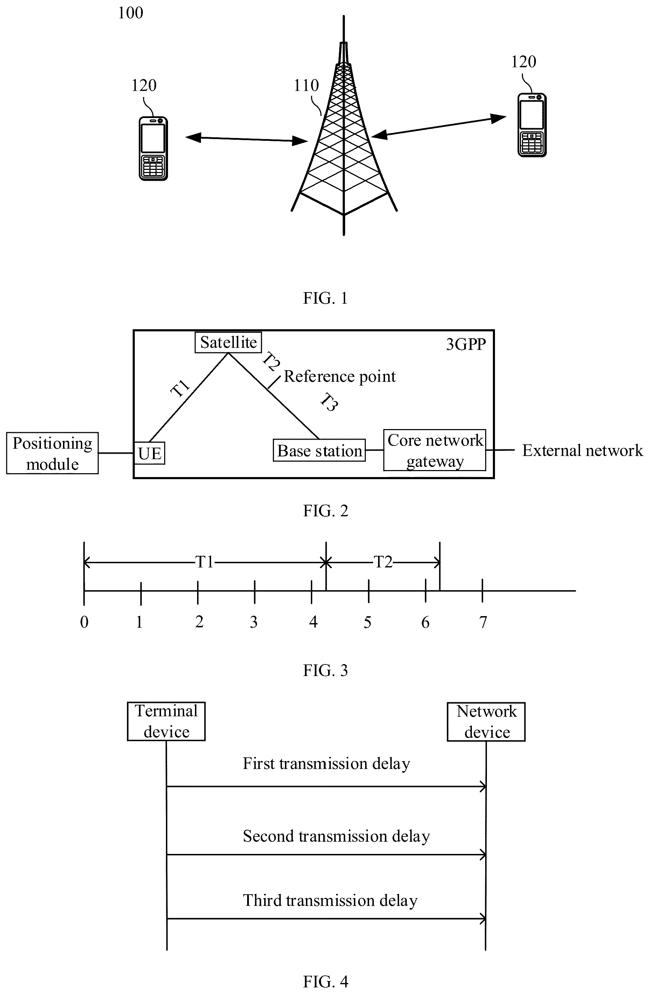

FIG. 1 is a wireless communication system 100 applied in an embodiment of the present disclosure. The wireless communication system 100 may include a network device 110 and terminal devices 120. The network device 110 may be a device that communicates with the terminal devices 120. The network device 110 may provide communication coverage for a specific geographical area and may communicate with the terminal devices 120 located in the coverage area.

FIG. 1 schematically shows one network device and two terminal devices. In an embodiment, the wireless communication system 100 may include multiple network devices and each network device may include other numbers of terminal devices within its coverage range, which is not limited by the embodiments of the present disclosure.

In some embodiments, the wireless communication system 100 may further include other network entities such as a network controller and a mobility management entity, which is not limited by the embodiments of the present disclosure.

It should be understood that the technical solution of the embodiments of the present disclosure may be applied to various communication systems, such as the 5th generation (5G) system or new radio (NR), long term evolution (LTE) system, frequency division duplex (FDD) system, time division duplex (TDD) system. The technical solution provided by the present disclosure may also be applied to future communication systems, such as the sixth generation mobile communication system, and a satellite communication system.

The terminal device in the embodiments of the present disclosure may also be called user equipment (UE), access terminal, user unit, user station, mobile station (MS), mobile Terminal (MT), remote station, remote terminal, mobile device, user terminal, terminal, wireless communication device, user agent or user device. The terminal device in the embodiments of the present disclosure may be a device that provides voice and/or data connectivity to users, and may be used to connect people, things and machines, such as handheld devices with wireless connection function, vehicle-mounted devices. The terminal device in the embodiments of the present disclosure may be a mobile phone, a tablet computer (Pad), a notebook computer, a palmtop computer, a mobile internet device (MID), a wearable device, a virtual reality (VR) device, an augmented reality (AR) device, wireless terminals in industrial control, wireless terminals in self driving, wireless terminals in remote medical surgery, wireless terminals in smart grid, wireless terminals in transportation safety, wireless terminals in smart city, wireless terminals in smart home, etc. In an embodiment, the UE may be used to act as a base station. For example, a UE may act as a scheduling entity that provides a sidelink signal between UEs in vehicle-to-everything (V2X) or Device-to-Device (D2D), etc. For example, a cellular phone and a car communicate with each other using sidelink signals. The communication between the cellular phone and the smart home device is through the sidelink signals, without relaying communication signals through the base station.

The network device in the embodiments of the present disclosure may be a device for communicating with a terminal device. The network device may also be called an access network device or a wireless access network device, for example, the network device may be a base station. The network device in the embodiments of the present disclosure may refer to a radio access network (RAN) node (or device) that connects a terminal device to a wireless network. The base station may broadly cover or replace the following names, such as Node B (NodeB), evolved NodeB (eNB), next generation base station (next generation NodeB, gNB), Relay Station, Access Point, transmitting and receiving point (TRP), a transmitting point (TP), a main station (MeNB), an auxiliary station (SeNB), a multi-standard wireless (MSR) node, a home base station, a network controller, an access node, a wireless node, an access piont (AP), a transmission node, a transceiver node, a base band unit (BBU), radio Remote Radio Unit (RRU), active antenna unit (AAU), remote radio head (RRH), central unit (CU), distributed unit (DU), positioning node, etc. The base station may be a macro base station, a micro base station, a relay node, a donor node, or similar, or a combination thereof. The base station may also refer to a communication module, a modem or a chip used to be arranged in the aforementioned devices or apparatuses. The base station may also be a mobile switching center, as well as devices that assume the functions of the base station in device-to-device (D2D), vehicle-to-everything (V2X) and machine-to-machine (M2M) communication, network side devices in 6G networks, devices responsible for base station functions in future communication systems, etc. The base station may support networks with the same or different access technologies. The embodiments of the present disclosure do not limit the specific technology and the specific device form adopted by the network device.

The base station may be fixed or mobile. For example, a helicopter or an unmanned aerial vehicle may be configured to act as a mobile base station, and one or more cells may move according to the position of the mobile base station. In other examples, a helicopter or an unmanned aerial vehicle may be configured to be configured as a device for communicating with another base station.

In some deployments, the network device in the embodiments of the present disclosure may refer to CU or DU, or the network device includes CU and DU. gNB may also include AAU.

Network devices and terminal devices may be deployed on land, including indoor or outdoor, handheld or vehicular; they may also be deployed on the water surface; they may also be deployed on airplanes, balloons, and satellites in the air. In the embodiments of the present disclosure, there is no limitation to the scene where the network device and the terminal device are located.

It should be understood that the communication device involved in the present disclosure may be a network device or a terminal device. For example, a first communication device is a network device, and a second communication device is a terminal device. For another example, the first communication device is a terminal device, and the second communication device is a network device. For another example, both the first communication device and the second communication device are network devices, or both the first communication device and the second communication device are terminal devices.

It should also be understood that all or part of the functions of the communication device in the present disclosure may also be implemented by software functions running on hardware, or by virtualization functions instantiated on a platform (such as a cloud platform).

In the current communication system, base stations are built at relatively high places on the ground, such as rooftops, mountain tops. Each base station may only cover an area with a certain coverage radius. The coverage radius varies from a few hundred meters to hundreds of kilometers. A specific coverage area depends on a frequency band of the base station. A low frequency band corresponds to a large coverage area, while a high frequency band corresponds to a small coverage area. For example, the coverage area corresponding to the 700MHz frequency band is larger than the coverage area corresponding to the 24GHz frequency band. This kind of base station is very efficient when being used for coverage in urban or suburban. However, this kind of base station is not efficient for coverage in rural areas. Because a population density in rural areas is low, in order to provide coverage, operators must build one base station every 100km, which is expensive but not profitable.

With the continuous development of communication networks and the continuous advancement of technologies such as the Internet of Things, there is also a need for coverage in inaccessible areas, such as monitoring the operation of oil pipelines in desert areas and supporting communication for ocean-going freighters in the ocean. Existing ground base stations cannot support such scenarios, so non terrestrial network (NTN) communication systems came into being.

### NTN communication system

NTN provides a communication service to a user with a non terrestrial manner. The non terrestrial manner may include, for example, satellites or unmanned aerial system (UAS) platforms.

For terrestrial network communication, communication devices cannot be arranged for land communication in oceans, mountains, deserts and other scenes. Alternatively, the land communication typically does not cover sparsely populated areas due to the cost of arranging and operating the communication devices. Compared with terrestrial network (TN) communication, NTN has many advantages. Firstly, NTN communication is not restricted by the user's geographical area. As for the NTN communication network, there is no geographical restriction. In theory, the satellite may orbit the earth, so every corner in the earth can be covered by satellite communication. Moreover, an area covered by the NTN communication device is much larger than an area covered by the terrestrial communication device. For example, in the satellite communication, one satellite may cover a large ground area. Secondly, the NTN communication has great social value. The NTN communication can achieve coverage at a lower cost. For example, satellite communication may be used to cover remote mountainous areas or poor and backward countries or regions at a lower cost. This allows people in these areas to enjoy advanced voice communication and mobile Internet technologies, which is conducive to narrowing the digital gap between these areas and developed areas and promoting the development of these areas. Thirdly, the NTN communication has a long communication distance and does not significantly increase the communication cost. In addition, the NTN communication has a high stability. For example, the NTN communication is not limited by natural conditions and can be used even in the case of natural disasters.

### Communication satellite

According to different orbital altitudes, communication satellites may be divided into low-earth orbit (LEO) satellites, medium-earth orbit (MEO) satellites, geostationary earth orbit (GEO) satellites, and high elliptical orbit (HEO) satellites, etc. The following describes LEO satellites and GEO satellites in detail.

An orbital altitude of the LEO satellite is in a range of 500km~1500km. An orbital period of the LEO satellite is about 1.5 hours to 2 hours. A signal propagation delay of single-hop communication between users is generally less than 20ms. A maximum satellite visibility time is 20 minutes. A signal propagation distance is short, a link loss is small, and a transmission power requirement of the user terminal is not high.

An orbital altitude of the GEO satellite is 35786km. A period of the GEO satellite rotating around the earth is 24 hours. A signal propagation delay of single-hop communication between users is generally 250ms.

In order to ensure satellite coverage and improve a system capacity of the entire satellite communication system, the satellite may use multiple beams to cover the ground, that is, multiple beam foot prints may form a field of view of the satellite. For example, one satellite may form dozens or even hundreds of beams to cover the ground. One satellite beam may cover a ground area with a diameter of tens to hundreds of kilometers.

### Satellite network architecture

FIG. 2 is a schematic diagram of a satellite network architecture according to an embodiment of the present disclosure. In the satellite network architecture shown in FIG. 2, the part in the rectangular frame is the 3rd generation partnership project (3GPP) network, and the part outside of the rectangular frame is the non-3GPP network. The satellite network architecture may include a satellite, a base station and a core network gateway. The core network gateway and the base station are usually located on the ground. The base station is connected to the terminal device through the satellite. Communication between the terminal device and the base station may be achieved through satellite forwarding.

In order to ensure normal communication between the terminal device and the base station, uplink and downlink synchronization is required between the terminal device and the base station. For the satellite communication system, the base station sets a reference point between the base station and the satellite, and the base station and terminal device are time aligned at the reference point. That is, a downlink signal sent by the base station and an uplink signal sent by the terminal device are aligned in the subframe at the reference point. Therefore, each of the terminal device and the base station needs to calculate its transmission delay. The transmission delay corresponding to the terminal device may also be called an uplink transmission timing advance (TA), or a timing advance that the terminal device needs to compensate for. Taking FIG. 2 as an example, the transmission delay in FIG. 2 may include T1, T2 and T3. The terminal device needs to compensate for the transmission delays T1 and T2, and the base station needs to compensate for the transmission delay T3.

Currently, the terminal device reports a total transmission delay (T1+T2) for the base station to determine the earliest subframe that can be scheduled. The (T1+T2) reported by the terminal device is in units of time slot. The specific calculation method is as follow. The terminal device calculates T1 and T2 respectively, sums T1 and T2, and then rounds up to an integer multiple of the time slot, such as X time slots, and notifies the base station of X time slots. Taking FIG. 3 as an example, T1 is about 4.2ms, and T2 is about 2ms. T1 and T2 are added together to obtain a sum, the sum is between 6 and 7. Therefore, the transmission delay that the terminal device may report to the base station is 7. In the existing protocol, the terminal device may report the transmission delay to the base station through media access control control elements (MAC CE).

In the above process, the terminal device needs to know its own geographical position in order to calculate T1. Therefore, the terminal device generally needs to have a positioning module. The positioning module may determine the position information of the terminal device. When determining the transmission delay, the terminal device may calculate a straight-line distance between the terminal device and the satellite based on position information of the terminal device and an instantaneous geometric position of the satellite, and then divide the straight-line distance by the speed of light to obtain T1. For T2, the terminal device may calculate T2 based on the reference time of the ephemeris information and the current time. It can be seen that the transmission delay information reported by the terminal device is determined based on the position information of the terminal device, but the calculation process cannot be reversed. In other words, the terminal device may infer the reported transmission delay based on its own position information. However, after the base station receives the transmission delay, the base station cannot infer the position information of the terminal device.

In the above inference, the terminal device obtains its own position information from the positioning module, but the positioning module does not belong to the scope of 3GPP, and its legality needs to be proven. To this end, the 3GPP network positions the terminal device, and then compares a positioning result with the position information reported by the terminal device. If the difference between the positioning result and the position information reported by the terminal device exceeds a certain threshold, the position information reported by the terminal device is considered unreliable, that is, the positioning module is unreliable.

In the above process, the terminal device reports its position information to the network device in the following manners.
1. Directly report the position information, such as latitude and longitude. For example, the terminal device obtains the latitude and longitude information from the positioning module and reports the latitude and longitude information to the network device through a radio resource control (RRC) message. This manner is simple and reliable, but if the terminal device reports the position information directly, there may be security risks.
2. Report transmission delay information multiple times. The terminal device may report the transmission delay to the network device at different times. Theoretically, the network device may lock the position of the terminal device on a circumference of a circle based on one transmission delay; the network device may lock the position of the terminal device on two intersections of two circles based on two transmission delays; the network device may determine the position of the terminal device based on three transmission delays. As shown in FIG. 4, the terminal device may report the transmission delay to the network device three times at three time instants. The network device may determine the position of the terminal device based on three transmission delays.

At present, 3GPP has determined that under certain conditions, such as low-orbit satellites, fixed cells, a positioning accuracy of 90% of terminal devices can reach 10km by using the process shown in FIG. 4, and a duration of the process shown FIG. 4 does not exceed the threshold. If a quantity of the reported transmission delays increases, the positioning accuracy can be even higher. Therefore, the manner of reporting the position of the terminal device in FIG. 4 becomes a possible way for reporting the position information because security is guaranteed.

However, there is currently no clear solution for the terminal device to report the transmission delay information.

If the terminal device uses the current delay reporting manner, there may be following problems, including delay problem and accuracy problem, for example. These problems are described below.
1. In the existing protocol, the terminal device determines to report the transmission delay based on an event triggering. Specifically, assuming that a transmission delay is TA1 when the terminal device reports the transmission delay last time, when the terminal device detects that a change between the current transmission delay and TA1 exceeds a threshold, the terminal device reports the transmission delay, namely TA2. If the change of the transmission delay does not exceed the threshold, the terminal device does not report the transmission delay. The above threshold may be configured by the network device. It can be seen from the above that, if the transmission delay is reported based on the event triggering, a time interval between two reports of the transmission delay may be longer, resulting in a larger positioning delay.
2. The terminal device reports the transmission delay through MAC CE, and MAC CE has a higher priority during scheduling. The transmission of MAC CE may occupy transmission resources of other data. Therefore, multiple reports of the transmission delay may affect the transmission of other data.
3. Satellite cells move faster relative to the ground, causing the serving cells of the same terminal device to constantly change. If the terminal device reports the transmission delay to a cell A several times and then reports the transmission delay to a cell B, in this case, information interaction is required to be performed between the cell A and the cell B to calculate the position information of the terminal device.
4. The transmission delay reported by the terminal device is (T1+T2) in FIG. 2. After the network device receives the transmission delay sent by the terminal device, it needs to subtract T2 from the transmission delay to obtain T1. The obtained T1 may be directly used to calculate the position information of the terminal device.
5. The transmission delay reported by the terminal device has a low accuracy. Since the purpose of the terminal device reporting the transmission delay in the current protocol is to allow the base station to determine the "earliest time slot that can be scheduled", the transmission delay reported by the terminal device is always in units of time slot. If the network device uses the transmission delay to calculate the position information of the terminal device, there may be a problem of low accuracy.

To address one or more of the above problems, the embodiments of the present disclosure provide a wireless communication method. The terminal device can send the reference information related to the transmission delay to the network device according to the configuration information, therefore it is provided a clear solution for the terminal device to report the transmission delay.

The terminal device and network device in the embodiment of the present disclosure may be the terminal device and the network device in the NTN communication system. Communication between the terminal device and the network device may be performed via satellite.

The embodiments of the present disclosure do not specifically limit the type of the network device. For example, the network device may be a base station or a core network element. The core network element may be, for example, an authentication management function (AMF), an Application Function (AF), or a location management function (LMF) or the like.

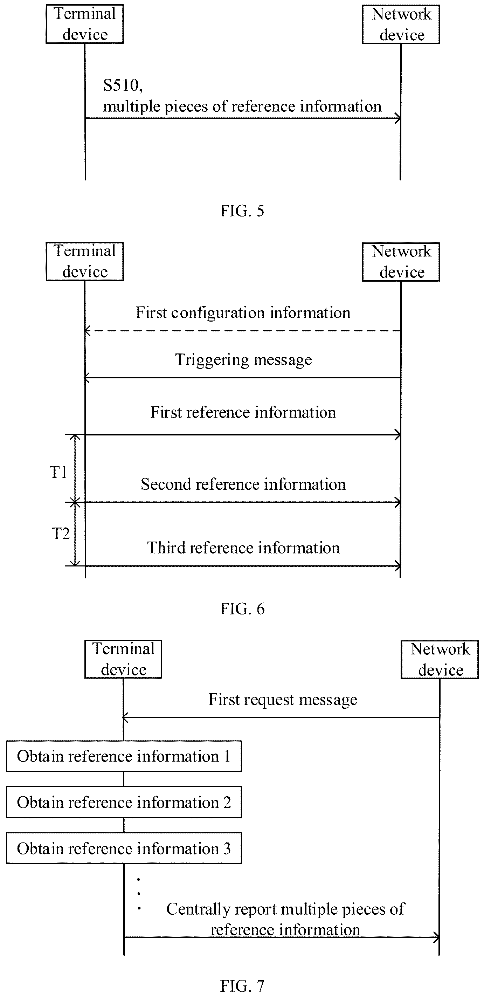

The wireless communication method provided by the embodiment of the present disclosure may be introduced below with reference to FIG. 5. Referring to FIG. 5, the method shown in FIG. 5 includes operation S510.

In S510, a terminal device sends multiple pieces of reference information to a network device according to configuration information. The multiple pieces of reference information are related to a transmission delay of the terminal device, and the multiple pieces of reference information may be configured to determine position information of the terminal device, or in other words, the multiple pieces of reference information may be configured to position the terminal device.

The embodiments of the present disclosure do not specifically limit the manner in which the terminal device sends the reference information. For example, the terminal device may send the reference information through an RRC message. For example, the terminal device may send the reference information to the base station through an RRC message. For another example, the terminal device may send the reference information through a non-access-stratum (NAS) message. For example, the terminal device may send the reference information to AMF through a NAS message. For another example, the terminal device may send the reference information through an LTE positioning protocol (LPP) message. For example, the terminal device may send the reference information to LMF through an LPP message.

The configuration information in the embodiment of the present disclosure may be sent by the network device to the terminal device, or may be predefined in the protocol, which is not specifically limited in the embodiment of the present disclosure. In some embodiments, the configuration information may be sent by the base station to the terminal device. For example, the base station may send the configuration information to the terminal device through an RRC message. For another example, the base station may also send the configuration information to the terminal device through MAC CE or downlink control information (DCI). In some embodiments, the base station may send multiple pieces of configuration information to the terminal device through an RRC message, and then activate one or more of the multiple pieces of configuration information through MAC CE or DCI.

The multiple pieces of reference information may be transmitted in many manners, and which are not specifically limited in the embodiments of the present disclosure. In some embodiments, the transmission manners for the multiple pieces of reference information include a first transmission method and a second transmission method. In the first transmission manner, the multiple pieces of reference information are carried in different messages. In the second transmission manner, the multiple pieces of reference information are carried in one message. As can be seen from the above, the terminal device needs to send multiple pieces of reference information to the network device so that the network device can determine the position information of the terminal device. The terminal device may send multiple pieces of reference information respectively through multiple messages. That is, the terminal device may only send one piece of reference information every time. Alternatively, the terminal device may also send multiple pieces of reference information through one message. That is, the terminal device may send multiple pieces of reference information to the network device at one time.

Different transmission manners correspond to different configuration information. In some embodiments, the first transmission manner may correspond to the first configuration information, and the second transmission manner may correspond to the second configuration information. For example, the network device may configure the first configuration information for the terminal device with respect to the first transmission manner, and configure the second configuration information for the terminal device with respect to the second transmission manner. The terminal device may select corresponding configuration information according to different transmission manners. The first configuration information and the second configuration information are described respectively below.

### Example 1

In some embodiments, the first configuration information may be used to indicate one or more of: sending time of the reference information, generating time of the reference information, a quantity of times the reference information being sent, content of the reference information, and an accuracy of the reference information.

The sending time of the reference information may be used by the terminal device to determine when to send the reference information to the network device. In some embodiments, the terminal device may determine a sending time instant of each piece of the reference information based on the sending time of the reference information, and send the reference information at the corresponding sending time instant. By configuring the sending time of the reference information, the terminal device may regularly send the reference information to the network device, thereby reducing a time interval between two reports of the reference information by the terminal device, which is beneficial to reducing a positioning delay.

The embodiments of the present disclosure do not specifically limit a manner for indicating the sending time of the reference information. For example, the first configuration information may be used to indicate a sending period of the reference information and/or a total sending duration corresponding to multiple times of sending of the reference information. In other words, the sending time of the reference information may include one or both of a sending period, and a total sending duration corresponding to multiple times of sending of the reference information. The total sending duration corresponding to multiple times of sending of the reference information may be represented by a time window.

If the first configuration information indicates the sending period of the reference information, the terminal device may periodically send the reference information to the network device according to the sending period. If the first configuration information indicates the total sending duration corresponding to multiple times of sending of the reference information, the terminal device may determine, by itself, the time to send the reference information based on the total sending duration, as long as the multiple pieces of reference information are sent within the total sending duration. For example, the first configuration information may be used to instruct the terminal device to report the reference information M times within a time window T, where M is a positive integer greater than 0. The terminal device may determine, by itself, the sending time instant of M times of sending of reference information within the time window T, which can increase the flexibility of transmission. If the first configuration information includes time window information, the terminal device may stop sending the reference information to the network device after the time window arrives.

The embodiments of the present disclosure do not specifically limit a representation manner of the sending period. As an example, the sending period may be a certain time value. The sending period may be in units of time slot, millisecond or a quantity of symbols. If the sending period is a certain time value, the terminal device may send the reference information to the network device every fixed duration. For example, if the sending period is one time slot, the terminal device may send the reference information to the network device at an interval of one time slot interval.

As another example, the sending period may be an array, which may contain multiple time values. The multiple time values represent time intervals between two adjacent sending time instants of the reference information. The multiple time values may be equal or unequal. The units of the multiple time values may be the same or different. The units of the multiple time values may be time slots, millisecond or a quantity of symbols. Taking an array {5ms, 10ms, 15ms, 20ms} as an example, after the terminal device sends the reference information for the first time at T0, the terminal device may send the reference information for the second time at (T0+5ms), send the reference information for the third time at (T0+15ms), send the reference information for the fourth time at (T0+30ms), and send the reference information for the fifth time at (T0+50ms). If the terminal device needs to continue sending the reference information, the array may be used cyclically. For example, the terminal device may send the reference information for the sixth time at (T0+55ms), send the reference information for the seventh time at (T0+65ms), and so on.

The generating time of the reference information may be used by the terminal device to determine when to generate the reference information. In some embodiments, the terminal device may determine the generating time instant of each piece of reference information based on the generating time of the reference information, and generate the reference information at the corresponding time instant.

The embodiments of the present disclosure do not specifically limit a manner for indicating the generating time of the reference information. For example, the first configuration information may be used to indicate a generating period of the reference information and/or a total generating duration corresponding to multiple times of generating of the reference information. In other words, the generating time of the reference information may include one or more of a generating period, and a total generating duration corresponding to multiple times of generating of the reference information. The total generating duration corresponding to multiple times of generating of the reference information may be represented by a time window.

If the first configuration information indicates the generating period of the reference information, the terminal device may periodically generate the reference information according to the generating period. If the first configuration information indicates the total generating duration corresponding to multiple times of generating of the reference information, the terminal device may determine, by itself, the time to generate the reference information based on the total generating duration, as long as the multiple pieces of reference information are generated within the total generating duration. For example, the first configuration information may be used to instruct the terminal device to generate the reference information M times within a time window T, where M is a positive integer greater than 0. The terminal device may determine, by itself, the generating time instant of M times of generating of reference information within the time window T, which can increase the flexibility of generating the reference information. If the first configuration information includes time window information, the terminal device may stop generating the reference information after the time window arrives.

The embodiments of the present disclosure do not specifically limit a representation manner of the generating period. As an example, the generating period may be a certain time value. The generating period may be in units of time slot, millisecond or a quantity of symbols. If the generating period is a certain time value, the terminal device may generate the reference information every fixed duration. For example, if the generating period is one time slot, the terminal device may generate the reference information at an interval of one time slot interval.

As another example, the generating period may be an array, which may contain multiple time values. The multiple time values represent time intervals between two adjacent generating time instants of the reference information. The multiple time values may be equal or unequal. The units of the multiple time values may be the same or different. The units of the multiple time values may be time slots, millisecond or a quantity of symbols. Taking an array {5ms, 10ms, 15ms, 20ms} as an example, after the terminal device generates the reference information for the first time at T0, the terminal device may generate the reference information for the second time at (T0+5ms), generate the reference information for the third time at (T0+15ms), generate the reference information for the fourth time at (T0+30ms), and generate the reference information for the fifth time at (T0+50ms). If the terminal device needs to continue generating the reference information, the array may be used cyclically. For example, the terminal device may generate the reference information for the sixth time at (T0+55ms), generate the reference information for the seventh time at (T0+65ms), and so on.

The generating time of the reference information and the sending time of the reference information may be equal or unequal, and this is not specifically limited in the embodiments of the present disclosure.

In some embodiments, the terminal device may send the reference information to the network device after generating the reference information, or the terminal device may send the reference information to the network device according to the sending time instant of the reference information after generating the reference information. In some embodiments, if the first configuration information only indicates the sending time instant of the reference information, the terminal device may generate the reference information before the sending time instant and send the reference information to the network device. If the first configuration information only indicates the generating time instant of the reference information, the terminal device may generate the reference information according to the indicated generating time instant, and directly send the reference information to the network device after generating the reference information. If the first configuration information indicates both the generating time instant of the reference information and the sending time instant of the reference information, the terminal device may generate the reference information at the generating time instant indicated by the first configuration information, and send the reference information at the sending time instant indicated by the first configuration information.

In some embodiments, the first configuration information may indicate a quantity of times the reference information being sent. For example, if the first configuration information indicates that the quantity of times the reference information being sent is N, and N is a positive integer greater than 0, the terminal device may send the reference information to the network device N times. After sending the reference information N times, the terminal device may stop sending the reference information to the network device.

In some embodiments, the first configuration information may be used to indicate content of the reference information. The content of the reference information may include one or more of a first transmission delay between the terminal device and a satellite, an uplink transmission timing advance of the terminal device, and a distance between the terminal device and the satellite. The first transmission delay may be understood as T1 described above, and the uplink transmission timing advance of the terminal device may be understood as T1+T2 described above. In some embodiments, the content of the reference information may include position information of the terminal device and/or the distance between the terminal device and the satellite. The terminal device may send the reference information according to the content indicated by the first configuration information.

In some embodiments, the first configuration information may indicate an accuracy of the reference information. The accuracy of the reference information may include the unit of the reference information and/or the accuracy of the numerical value of the reference information. If the content of the reference information is the transmission delay, the unit of the reference information may be symbol, microsecond, nanosecond etc., or the unit of the reference information may also be the basic unit Ts of the cellular network, Ts is 1/400MHz*4096. If the content of the reference information is the distance between the terminal device and the satellite, the unit of the reference information may be kilometer, meter or centimeter, etc. The accuracy of the numerical value of the reference information may refer to a case that the reference information is accurate to K digits after the decimal point, where K is a positive integer. By indicating the accuracy of the reference information, it is helpful to improve the positioning accuracy of the terminal device.

In some embodiments, the sending of the reference information may be triggered by a network device. For example, as shown in FIG. 6, the network device may send a triggering message to the terminal device, and the triggering message may be used to instruct the terminal device to send the multiple pieces of reference information. After receiving the triggering message, the terminal device may start sending the reference information to the network device. The triggering message may be MAC CE or DCI. In other words, the network device may trigger the terminal device to report the reference information through MAC CE or DCI.

In some embodiments, as shown in FIG. 6, before sending the triggering message to the terminal device, the network device may send the first configuration information to the terminal device. After receiving the triggering message sent by the network device, the terminal device may send the reference information to the network device according to the first configuration information. For example, the terminal device may determine the sending time instant of each piece of the reference information according to the first configuration information. In the solution shown in FIG. 6, a time interval between the sending time instant of the first reference information and the sending time instant of the second reference information is T1, and a time interval between the sending time instant of the second reference information and the sending time instant of the third reference information is T2.

In some embodiments, the first configuration information may be carried in the triggering message. As an example, if the network device does not configure the first configuration information for the terminal device before the triggering message, the network device may carry the first configuration information in the triggering message. Alternatively, if the first configuration information does not indicate first information, the triggering message may indicate the first information. The first information may include one or more of: the sending time of the reference information, the quantity of times the reference information being sent, the content of the reference information, and the accuracy of the reference information. For example, if the first configuration information does not indicate the sending time of the reference information, the triggering message may indicate the sending time of the reference information, for example, the triggering message may include the sending time instant of each piece of the reference information. For another example, if the first configuration information does not indicate the generating time of the reference information, the triggering message may indicate the generating time of the reference information, for example, the triggering message may include the generating time of each piece of the reference information. For another example, if the first configuration information does not indicate the quantity of times the reference information being sent, the triggering message may indicate the quantity of times the reference information being sent. For another example, if the first configuration information does not indicate the content of the reference information, the triggering message may indicate the content of the reference information. For another example, if the first configuration information does not indicate the accuracy of the reference information, the triggering message may indicate the accuracy of the reference information.

As another example, the first configuration information carried in the triggering message may be updated first configuration information. If the network device configures the first configuration information for the terminal device before the triggering message, the network device may update the first configuration information through the triggering message. That is, the triggering message may carry the updated first configuration information. For example, if the network device needs to update the first information, the network device may indicate the updated first information through a triggering message. For example, if the first configuration information indicates the first information and the network device needs to update the first information, the network device may update the first information through the triggering message. For example, if the network device needs to update the sending time of the reference information, the network device may update the sending time of the reference information through the triggering message. For another example, if the network device needs to update the generating time of the reference information, the network device may update the generating time of the reference information through the triggering message. For another example, if the network device needs to update the quantity of times the reference information being sent, the network device may update the quantity of times the reference information being sent through the triggering message. For another example, if the network device needs to update the content of the reference information, the network device may update the content of the reference information through the triggering message. For another example, if the network device needs to update the accuracy of the reference information, the network device may update the accuracy of the reference information through the triggering message.

In some embodiments, the network device may only indicate the reference information that needs to be updated, and does not need to indicate information that is not updated.

The embodiments of the present disclosure do not specifically limit the manner in which the triggering message indicates the first information. As an example, the triggering message may indicate the first information in an implicit manner. Taking the sending time of the reference information and the generating time of the reference information as an example, if the terminal device receives the triggering message at the first time instant, the terminal device may consider a time instant after the first moment and having a preset time interval with the first moment as the generating time of the reference information or the sending time of the reference information. For example, if the terminal device receives the triggering message at a time unit K, the terminal device may determine a time unit (K+N) as the generating time or the sending time of the reference information. K is an integer greater than or equal to 0, and N is a positive integer greater than 0. The time unit may be a time slot, a subframe, etc.

As another example, the triggering message may indicate the first information in an explicit manner. For example, the triggering message may directly carry the first information.

In some embodiments, the terminal device may send ephemeris information used to generate the reference information and/or a generating time instant of the reference information to the network device. For example, if the network device does not know the ephemeris information used by the terminal device, the terminal device needs to send the ephemeris information used to generate the reference information and/or the generation time instant of the reference information to the network device. The network device may determine the position information of the terminal device based on the first transmission delay and the ephemeris information of the satellite.

For example, if the terminal device obtains the ephemeris information through a broadcast message, the network device does not know which ephemeris information the terminal device uses. In this case, the terminal device needs to report the ephemeris information used to generate the reference information and/or the generating time instant of the reference information to the network device. If the terminal obtains the ephemeris information through a UE-specific message, the network device can clearly know which ephemeris information the terminal device uses. In this case, the terminal device does not need to report the ephemeris information used to generate the reference information and/or the generating time instant of the reference information to the network device.

In some embodiments, as mentioned above, the network device may indicate the generating time instant of the reference information to the terminal device. If the network device indicates the generation time instant of the reference information to the terminal device, the network device can know the ephemeris information used by the terminal device at the generation time instant. In this case, the terminal device does not need to indicate the generation time instant of the reference information to the network device. If the generation time instant of the reference information is determined by the terminal device, the terminal device needs to send the generation time instant of the reference information to the network device. After receiving the generation time instant of the reference information, the network device may determine the ephemeris information used by the terminal device to generate the reference information based on the ephemeris information and the generation time instant of the reference information indicated to the terminal device through a dedicated message.

In some embodiments, the network device may send first indication information to the terminal device to instruct the terminal device to stop sending the reference information. For example, if the first configuration information instructs the terminal device to send the reference information periodically, the network device may also send the first indication information to the network device to instruct the terminal device to stop sending the reference information, to avoid a case that the terminal device sends the reference information endlessly and avoid a waste of resources. The first indication information may be carried, for example, in MAC CE or DCI.

Apparently, if the first configuration information indicates information related to stopping sending the reference information, such as indicating the quantity of times the reference information being sent, or indicating information such as the time window for sending the reference information or generating the reference information, the network device does not need to send the reference information to the terminal device.

Satellite cells move faster relative to the ground, causing the serving cells of the terminal device to change. If the network device is the base station corresponding to the serving cell of the terminal device, the terminal device may experience inter-cell handover during the process of sending the reference information multiple times. After the inter-cell handover occurs, the terminal device may continue to send the reference information to the serving cell after the handover. The base station may determine the position information of the terminal device based on all reference information sent by the terminal device.

For example, assuming that the terminal device performs a handover from a first cell to a second cell, before the inter-cell handover, the terminal device may send the reference information to the first cell, and after the inter-cell handover, the terminal device may send the reference information to the second cell.

For convenience of description, a base station corresponding to the first cell is called a first base station, and a base station corresponding to the second cell is called a second base station.

In order to determine the position information of the terminal device, the second base station may determine the position information of the terminal device based on the reference information sent by the terminal device to the first base station and the reference information sent to the second base station. In some embodiments, the second base station may obtain, from the first base station, the reference information sent by the terminal device to the first base station.

In some embodiments, the network device may send second indication information to the terminal device. The second indication information may be used to indicate one or both of: whether to send the reference information to the second cell, and updated first configuration information. In some embodiments, the network device may be a base station corresponding to the second cell. In some embodiments, the second indication information may be carried in a handover command, or in other words, the second indication information may be carried in a radio resource reconfiguration message.

The second cell may indicate to the terminal device whether to continue sending the reference information through the handover command or the radio resource reconfiguration message. The terminal device may determine whether to continue sending the reference information to the second cell according to the indication from the second cell.

In some embodiments, if the second cell instructs the terminal device to continue sending the reference information and there are changes to the first configuration information, the second cell may indicate the updated first configuration information to the terminal device through the handover command or the radio resource reconfiguration message. The terminal device may use the updated first configuration information to send the reference information to the second cell.

In some embodiments, if the reference information includes the first transmission delay between the terminal device and the satellite, that is, the network device receives the first transmission delay, the network device may determine the position information of the terminal device based on the first transmission delay and the position information of the satellite. The position information of the satellite may be determined by the ephemeris information of the satellite.

In some embodiments, if the reference information includes the uplink transmission delay of the terminal device, the network device may determine the transmission delay between the terminal device and the satellite based on the ephemeris information corresponding to the reference information and the generating time instant of the reference information. Further, the network device may determine the position information of the terminal device based on the transmission delay between the terminal device and the satellite.

In some embodiments, if the reference information includes the distance between the terminal device and the satellite, the network device may determine the position information of the terminal device based on the distance and the position information of the satellite.

The first configuration information is introduced in detail above, and the second configuration information is introduced below.

### Example 2

The second configuration information may be used to indicate one or more of: a quantity of the pieces of reference information carried in one message, a time window length corresponding to the multiple pieces of reference information, time of the terminal device obtaining the reference information, a quantity of the pieces of reference information obtained within a preset time window length, content of the reference information, an accuracy of the reference information, and whether the terminal device needs report second information. The embodiments of the present disclosure do not specifically limit the content of the second information. For example, the second information may include one or both of ephemeris information corresponding to the reference information, and a generating time instant of the reference information.

In some embodiments, the second configuration information may only indicate that the terminal device needs to report the second information. Further, the network device may indicate specific content of the second information to the terminal device through other messages, that is, the network device may indicate what information the terminal device specifically needs to report.

The quantity of the pieces of reference information carried in one message may be used by the terminal device to determine how many pieces of reference information are to be sent to the network device at one time. For example, if the second configuration information indicates that one message carries N pieces of reference information, and N is a positive integer greater than 0, the terminal device may integrate the N pieces of reference information into one message and report the N pieces of reference information to the network device at once.

In some embodiments, the quantity of the pieces of reference information may be the maximum quantity. That is, the second configuration information may be used to indicate the maximum quantity of the pieces of reference information carried in one message. When the terminal device sends the reference information, the quantity of the pieces of reference information carried in one message cannot exceed the maximum quantity. That is, the quantity of the pieces of reference information carried in one message is less than or equal to the maximum quantity.

In some embodiments, the terminal device may determine the quantity of the pieces of reference information carried in one message according to an instruction from the network device or according to internal implementation of the terminal device.

In some embodiments, the second configuration information may be used to indicate a time window length corresponding to the multiple pieces of reference information. By indicating the time window length corresponding to the multiple pieces of reference information, a time range within which the terminal device obtains multiple pieces of reference information are limited. For example, if the second configuration information indicates that the time window length corresponding to the multiple pieces of reference information is T, the terminal device needs to obtain at least the multiple pieces of reference information within the time window T.

In some embodiments, the second configuration information may be used to indicate a quantity of the pieces of reference information obtained within a preset time window length. If the second configuration information indicates that the quantity of the pieces of reference information obtained within the preset time window length is M, the terminal device obtains M pieces of reference information within the preset time window length. M may be the same as or different from the quantity of the pieces of reference information carried in one message, which is not specifically limited in the embodiments of the present disclosure.

In some embodiments, the second configuration information may be used to indicate time of the terminal device obtaining the reference information. The terminal device may obtain the reference information at the corresponding time according to the indication of the second configuration information. The embodiments of the present disclosure do not specifically limit the manner in which the second configuration information indicates the time of obtaining the reference information. For example, the second configuration information may indicate a specific time instant of obtaining the reference information. For another example, the second configuration information may be used to indicate a period of obtaining the reference information. The terminal device may obtain the reference information according to the period. The period may be a fixed value, or the period may be an array. The embodiments of the present disclosure do not specifically limit the unit of the period. The unit of period may be, for example, time slot, millisecond, or a quantity of symbols.

For example, the array may contain multiple time values. The multiple time values represent time intervals between two adjacent obtaining time instants of the reference information. The multiple time values may be equal or unequal. The units of the multiple time values may be the same or different. The units of the multiple time values may be time slots, millisecond or a quantity of symbols. Taking an array {5ms, 10ms, 15ms, 20ms} as an example, after the terminal device obtains the reference information for the first time at T0, the terminal device may obtain the reference information for the second time at (T0+5ms), obtain the reference information for the third time at (T0+15ms), obtain the reference information for the fourth time at (T0+30ms), and obtain the reference information for the fifth time at (T0+50ms). If the terminal device needs to continue obtaining the reference information, the array may be used cyclically. For example, the terminal device may obtain the reference information for the sixth time at (T0+55ms), obtain the reference information for the seventh time at (T0+65ms), and so on.

In some embodiments, the second configuration information may be used to indicate content of the reference information. The content of the reference information may include one or more of a first transmission delay between the terminal device and a satellite, an uplink transmission timing advance of the terminal device, and a distance between the terminal device and the satellite. The first transmission delay may be understood as T1 described above, and the uplink transmission timing advance of the terminal device may be understood as T1+T2 described above. In some embodiments, the content of the reference information may include position information of the terminal device and/or the distance between the terminal device and the satellite. The terminal device may send the reference information according to the content indicated by the second configuration information.

In some embodiments, the terminal device may experience changes in satellite cells and/or changes in serving cells during the process of obtaining the reference information. In this case, the content of the reference information may include one or more of the first transmission delay between the terminal device and one or more satellites, the uplink transmission timing advance of the terminal device in one or more cells, and the distance between the terminal device and one or more satellites.

In some embodiments, the second configuration information may indicate an accuracy of the reference information. The accuracy of the reference information may include the unit of the reference information and/or the accuracy of the numerical value of the reference information. If the content of the reference information is the transmission delay, the unit of the reference information may be symbol, microsecond, nanosecond etc., or the unit of the reference information may also be the basic unit Ts of the cellular network, Ts is 1/400MHz*4096. If the content of the reference information is the distance between the terminal device and the satellite, the unit of the reference information may be kilometer, meter or centimeter, etc. The accuracy of the numerical value of the reference information may refer to a case that the reference information is accurate to K digits after the decimal point, where K is a positive integer. By indicating the accuracy of the reference information, it is helpful to improve the positioning accuracy of the terminal device.

In some embodiments, the second configuration information may be used to indicate whether the terminal device needs to report the second information. In some embodiments, the second information may include the generating time instant of the reference information. Since the terminal device integrates multiple pieces of reference information into one message and sends it, the network device cannot determine the generating time instant of each piece of reference information. Therefore, the terminal device may send the generating time instant of each piece of reference information to the network device, so that the network device can determine the position information of the terminal device. The generating time instant of the reference information may be expressed in the form of time units or in the form of absolute time. For example, the generating time instant of the reference information may be represented in the form of "radio frame number + subframe number", or may be represented in the form of "hour, minute, and second". The representation form of the generating time instant of the reference information may also be indicated by the second configuration information.

In some embodiments, the first information may include ephemeris information corresponding to the reference information. The ephemeris information may be used by the network device to determine the position of the satellite and/or the transmission delay between the satellite and the reference point, and then determine the position information of the terminal device. If the network device does not know the ephemeris information corresponding to the reference information, the network device cannot determine the position information of the terminal device.

Since an updating cycle of the ephemeris information is very large, the reference information reported by the terminal device may have multiple pieces of reference information sharing the same ephemeris information. In this case, the terminal device may report one pieces of ephemeris information for the multiple pieces of reference information.

The embodiment of the present disclosure does not specifically limit the way in which the terminal device indicates the ephemeris information. As an example, among the multiple pieces of reference information sent by the terminal device, the terminal device may indicate the corresponding ephemeris information for the first piece of reference information. For subsequent pieces of reference information, if the ephemeris information does not change, the terminal device does not need to indicate the corresponding ephemeris information, or the terminal device may indicate to the network device whether the ephemeris information are updated. As another example, the terminal device may indicate the correspondence between multiple pieces of reference information and the ephemeris information to the network device, and the network device may determine the ephemeris information corresponding to each piece of reference information based on the correspondence.

In some embodiments, the generating and/or sending of the reference information may be triggered by the network device. For example, as shown in FIG. 7, the network device may send a first request message to the terminal device, where the first request message is used to request the terminal device to send the reference information. After receiving the first request message, the terminal device may obtain multiple pieces of reference information and send the multiple pieces of reference information together to the network device.

The terminal device may obtain its own position information through the positioning module, and calculate the reference information required to be reported by the network device based on the position information. After the terminal device collects multiple pieces of reference information, terminal device may report the multiple pieces of reference information together to the network device.

In some embodiments, the terminal device may send third information to the network device. The third information may include one or more of ephemeris information used to generate the reference information, a correspondence between the ephemeris information and the reference information, and a generating time instant of the reference information.

In some embodiments, if the network device does not know the ephemeris information used by the terminal device, the terminal device may send the third information to the network device. For example, if the terminal device obtains the ephemeris information through a broadcast message, the network device does not know which ephemeris information is used by the terminal device. In this case, the terminal device needs to send the third information to the network device. If the terminal obtains the ephemeris information through a UE-specific message, the network device can clearly know which ephemeris information is used by the terminal device. In this case, the terminal device does not need to send the third information to the network device.

In some embodiments, as mentioned above, the network device may indicate the generating time instant of the reference information (or the time of obtaining the reference information) to the terminal device. If the network device indicates the generating time instant of the reference information to the terminal device, the network device can know the ephemeris information used by the terminal device at the generating time instant. In this case, the terminal device does not need to indicate the generating time instant of the reference information to the network device. If the generating time instant of the reference information is determined by the terminal device, the terminal device needs to send the generating time instant of the reference information to the network device. After receiving the generating time instant of the reference information, the network device may determine the ephemeris information used by the terminal device to generate the reference information based on the ephemeris information and the generating time instant of the reference information indicated to the terminal device through a dedicated message.

In some embodiments, if the network device can determine the ephemeris information used by the terminal device to generate the reference information based on the generating time instant of the reference information, the third information does not need to include the ephemeris information used to generate the reference information and /or the correspondence between the ephemeris information and the reference information, for example, the third information may only include the generating time instant of the reference information. If the network device cannot determine the ephemeris information used by the terminal device to generate the reference information based on the generating time instant of the reference information, the third information may include the ephemeris information used to generate the reference information and/or the correspondence between the ephemeris information and the reference information. For example, the third information includes the ephemeris information used to generate the reference information, the correspondence between the ephemeris information and the reference information, and the generating time instant of the reference information.

In some embodiments, the terminal device may obtain multiple pieces of reference information and only send part of the multiple pieces of reference information to the network device. For example, the terminal device may obtain M pieces of reference information and select N pieces of reference information from the M pieces of reference information to send the N pieces of reference information. M and N are both positive integers, and M is greater than or equal to N.

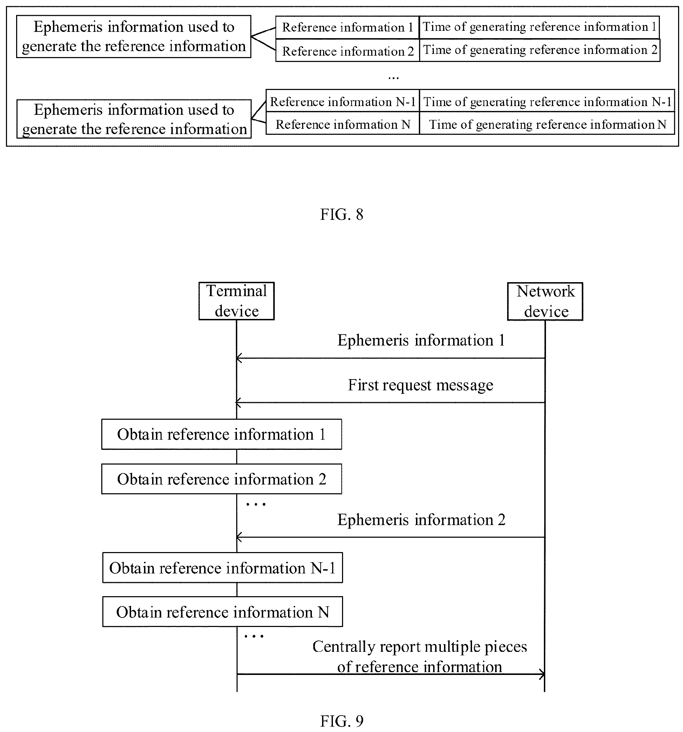

Referring to FIG. 8, the terminal device may send the ephemeris information used to generate the reference information, the correspondence between the reference information and the ephemeris information, and the generating time instant of the reference information to the network device. If there are multiple pieces of reference information corresponding to the same ephemeris information, the terminal device may only report one piece of ephemeris information. As shown in FIG. 8, the ephemeris information used by the terminal device to generate reference information 1 is the same as the ephemeris information used by the terminal device to generate reference information 2, so the terminal device may report one piece of ephemeris information for the reference information 1 and the reference information 2. The ephemeris information used by the terminal device to generate reference information N-1 is the same as the ephemeris information used by the terminal device to generate reference information N, so the terminal device may report one piece of ephemeris information for the reference information N-1 and the reference information N.

In some embodiments, the ephemeris information used by the terminal device to generate the reference information may be indicated to the terminal device by the network device. For example, the network device may send third indication information to the terminal device, and the third indication information may be used to indicate the ephemeris information used by the terminal device to generate the reference information. If the ephemeris information used to generate the reference information is indicated by the network device, the terminal device does not need to send the ephemeris information to the network device.

In some embodiments, the third indication information may be carried in a RRC signaling. That is, the network device may send the third indication information to the terminal device through the RRC signaling. The RRC signaling may be a dedicated RRC signaling.

In some embodiments, the network device may indicate the ephemeris information to the terminal device each time the ephemeris information changes. Referring to FIG. 9, the network device may indicate ephemeris information 1 to the terminal device, and the terminal device generates reference information 1 and reference information 2 based on the ephemeris information 1. After the ephemeris information changes, the network device indicates ephemeris information 2 to the terminal device, and the terminal device generates reference information N-1 and reference information N based on the ephemeris information 2.

The embodiments of the present disclosure do not specifically limit an execution order of the network device sending the ephemeris information and the network device sending the first request message. For example, the network device may first send the ephemeris information 1 to the terminal device, and then send the first request message to the terminal device. Alternatively, the network device may first send the first request message to the terminal device, and then send the ephemeris information 1 to the terminal device.

The network device may determine the ephemeris information corresponding to each piece of reference information based on the time instant when the ephemeris information is indicated to the terminal device and the time instant when the terminal device generates the reference information. For example, if the generating time instant of the reference information 1 is between the time instant when the network device indicates the ephemeris information 1 and the time instant when the network device indicates the ephemeris information 2, the network device may determine that the ephemeris information corresponding to the reference information 1 is the ephemeris information 1.

In the process of obtaining the reference information, the terminal device may experience changes in the serving cell. If pieces of ephemeris information corresponding to the multiple pieces of reference information are different, the ephemeris information used by the terminal device may be indicated by different base stations. For this case, the network device that ultimately receives the reference information does not know the ephemeris information used by the terminal device.

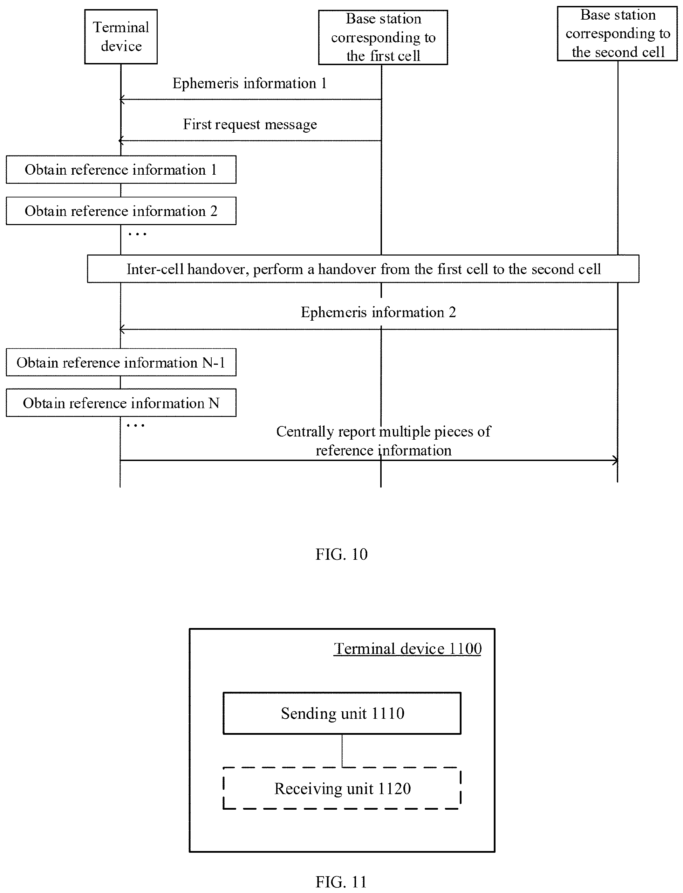

For example, taking FIG. 10 as an example, if the terminal device performs a handover from a first cell to a second cell, before the inter-cell handover, a base station corresponding to the first cell may indicate the ephemeris information to the terminal device. For example, the base station corresponding to the first cell may send the ephemeris information 1 to the terminal device. The terminal device may obtain reference information 1 and reference information 2 based on the ephemeris information 1. After the inter-cell handover, a base station corresponding to the second cell may indicate the ephemeris information to the terminal device. For example, the base station corresponding to the second cell may send ephemeris information 2 to the terminal device. The terminal device may generate reference information N-1 and reference information N based on the ephemeris information 2. The serving cell the terminal device, when reporting the reference information, is the second cell, therefore, the terminal device may send multiple pieces of reference information to the second cell.

In order to determine the position information of the terminal device, the base station corresponding to the second cell needs to obtain the ephemeris information used by the terminal device to generate the reference information. The embodiments of the present disclosure do not specifically limit the way in which the base station corresponding to the second cell obtains the ephemeris information. The base station corresponding to the second cell may obtain the ephemeris information from a first device. The first device may be one or more of a terminal device, a base station corresponding to the first cell, a network management device, or a satellite management network element. For example, the satellite management network element may be an AF.

As an example, the ephemeris information may be sent by the terminal device to the network device. For each piece of reference information, the terminal device may send the ephemeris information corresponding to the reference information to the network device.

As another example, the base station corresponding to the second cell may obtain the ephemeris information from the base station corresponding to the first cell. After the base station corresponding to the second cell receives the reference information sent by the terminal device, if it is determined that part of the reference information is generated before the inter-cell handover, the base station corresponding to the second cell may send a request message to the base station corresponding to cell 1 to request the ephemeris information used by the terminal device before the inter-cell handover.

As another example, the base station corresponding to the second cell may obtain the ephemeris information from a network management platform or the satellite management network element. After the base station corresponding to the second cell receives the reference information sent by the terminal device, if it is determined that part of the reference information is generated before the inter-cell handover, the base station corresponding to the second cell may request the ephemeris information used by the terminal device before the inter-cell handover from the network management platform or the satellite management network element.

In some embodiments, the base station corresponding to the second cell may send the reference information sent by the terminal device to a core network element, and the core network element determines the position information of the terminal device. The reference information may include reference information generated for the first cell and reference information generated for the second cell.

Through the above method, the network device may obtain the ephemeris information corresponding to the reference information, and then the network device may determine the position information of the terminal device based on the ephemeris information.

The method embodiments of the present disclosure are described in detail above with reference to FIG. 1 to FIG 10, and the device embodiments of the present disclosure are described in detail below with reference to FIG. 11 to FIG. 13. It should be understood that the description of the method embodiments corresponds to the description of the device embodiments. Therefore, the parts not described in detail may be referred to the previous method embodiments.

FIG. 11 is a schematic block diagram of a terminal device according to an embodiment of the present disclosure. The terminal device 1100 shown in FIG. 11 may be any terminal device described above. The terminal device 1100 may include a sending unit 1110.

The sending unit 1110 is configured to send multiple pieces of reference information to a network device according to configuration information, where the multiple pieces of reference information are related to a transmission delay of the terminal device, and the multiple pieces of reference information are used to determine position information of the terminal device.

In some embodiments, the multiple pieces of reference information are transmitted in a first transmission manner, and the first transmission manner is that the multiple pieces of reference information are carried in different messages.

In some embodiments, the first transmission manner corresponds to first configuration information, and the first configuration information is used to indicate one or more of sending time of the reference information, generating time of the reference information, a quantity of times the reference information being sent, content of the reference information, and an accuracy of the reference information.

In some embodiments, the sending time of the reference information includes one or more of a sending period, and a total sending duration corresponding to multiple times of sending of the reference information.

In some embodiments, the terminal device further includes a receiving unit 1120 configured to receive a triggering message sent by the network device, where the triggering message is used to trigger the terminal device to send the multiple pieces of reference information.

In some embodiments, the first configuration information is carried in the triggering message.

In some embodiments, the sending unit 1110 is further configured to send ephemeris information used to generate the reference information and/or a generating time instant of the reference information to the network device.

In some embodiments, the terminal device further includes a receiving unit 1120 configured to receive first indication information sent by the network device, where the first indication information is used to instruct to stop sending the reference information.

In some embodiments, the multiple pieces of reference information are transmitted in a second transmission manner, and the second transmission manner is that the multiple pieces of reference information are carried in one message.

In some embodiments, the second transmission manner corresponds to second configuration information, and the second configuration information is used to indicate one or more of a quantity of the pieces of reference information carried in one message, a time window length corresponding to the multiple pieces of reference information, time of the terminal device obtaining the reference information, a quantity of the pieces of reference information obtained within a preset time window length, content of the reference information, an accuracy of the reference information, and whether the terminal device needs to report second information.

In some embodiments, the second information includes one or more of ephemeris information corresponding to the reference information, and a generating time instant of the reference information.

In some embodiments, the sending unit 1110 is further configured to send third information to the network device, where the third information includes one or more of ephemeris information used to generate the reference information, a correspondence between the ephemeris information and the reference information, and a generating time instant of the reference information.

In some embodiments, the content of the reference information includes one or more of a first transmission delay between the terminal device and a satellite, an uplink transmission timing advance of the terminal device, and a distance between the terminal device and the satellite.

In some embodiments, the terminal device further includes a receiving unit 1120 configured to receive second indication information sent by the network device in response to the terminal device performing a handover from a first cell to a second cell, where the second indication information is used to indicate one or both of whether to send the reference information to the second cell, and updated configuration information.

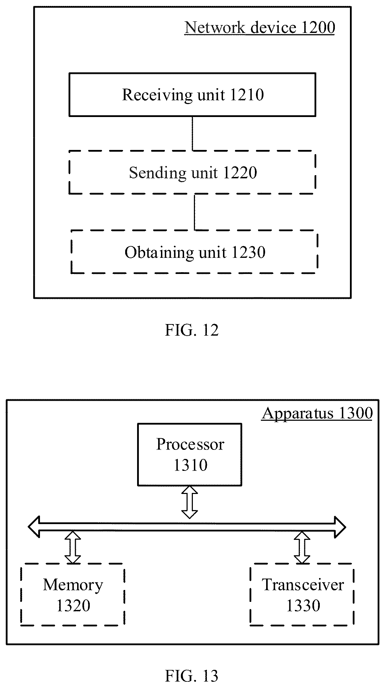

FIG. 12 is a schematic block diagram of a network device according to an embodiment of the present disclosure. The network device 1200 shown in FIG. 12 may be any network device described above. The network device 1200 may include a receiving unit 1210.

The receiving unit 1210 is configured to receive multiple pieces of reference information sent by a terminal device according to configuration information, where the multiple pieces of reference information are related to a transmission delay of the terminal device, and the multiple pieces of reference information are used to determine position information of the terminal device.

In some embodiments, the multiple pieces of reference information are transmitted in a first transmission manner, and the first transmission manner is that the multiple pieces of reference information are carried in different messages.

In some embodiments, the first transmission manner corresponds to first configuration information, and the first configuration information is used to indicate one or more of sending time of the reference information, generating time of the reference information, a quantity of times the reference information being sent, content of the reference information, and an accuracy of the reference information.

In some embodiments, the sending time of the reference information includes one or more of a sending period, and a total sending duration corresponding to multiple times of sending of the reference information.

In some embodiments, the network device further includes a sending unit 1220 configured to send a triggering message to the terminal device, where the triggering message is used to trigger the terminal device to send the multiple pieces of reference information.

In some embodiments, the first configuration information is carried in the triggering message.

In some embodiments, the receiving unit 1210 is further configured to receive ephemeris information used to generate the reference information and/or a generating time instant of the reference information sent by the terminal device.

In some embodiments, the network device further includes a sending unit 1220 configured to send first indication information to the terminal device, where the first indication information is used to instruct to stop sending the reference information.

In some embodiments, the multiple pieces of reference information are transmitted in a second transmission manner, and the second transmission manner is that the multiple pieces of reference information are carried in one message.

In some embodiments, the second transmission manner corresponds to second configuration information, and the second configuration information is used to indicate one or more of a quantity of the pieces of reference information carried in one message, a time window length corresponding to the multiple pieces of reference information, time of the terminal device obtaining the reference information, a quantity of the pieces of reference information obtained within a preset time window length, content of the reference information, an accuracy of the reference information, and whether the terminal device needs to report second information.

In some embodiments, the second information includes one or more of ephemeris information corresponding to the reference information, and a generating time instant of the reference information.

In some embodiments, the receiving unit 1210 is further configured to receive third information sent by the terminal device, where the third information includes one or more of ephemeris information used to generate the reference information, a correspondence between the ephemeris information and the reference information, and a generating time instant of the reference information.

In some embodiments, the network device further includes an obtaining unit 1230 configured to obtain, from a first device, ephemeris information used to generate the reference information by the terminal device in response to the terminal device performing a handover from a first cell to a second cell, where the first device includes one or more of the terminal device, a base station corresponding to the first cell, a network management platform, and a satellite management network element.

In some embodiments, the content of the reference information includes one or more of a first transmission delay between the terminal device and a satellite, an uplink transmission timing advance of the terminal device, and a distance between the terminal device and the satellite.

In some embodiments, the network device further includes a sending unit 1220 configured to send second indication information to the terminal device in response to the terminal device performing a handover from a first cell to a second cell, where the second indication information is used to indicate one or more of whether to send the reference information to the second cell, and updated configuration information.

FIG. 13 is a schematic structural diagram of an apparatus according to an embodiment of the present disclosure. The dashed line in FIG. 13 indicates that the unit or module is optional. The apparatus 1300 may be used to implement the method described in the above method embodiments. The apparatus 1300 may be a chip, a terminal device or a network device.

The apparatus 1300 may include one or more processors 1310. The processor 1310 may support the apparatus 1300 to implement the method described in the previous method embodiments. The processor 1310 may be a general-purpose processor or a dedicated processor. For example, the processor may be a central processing unit (CPU). Alternatively, the processor may also be other general processors, digital signal processor (DSP), application specific integrated circuits (ASIC), field programmable gate array (FPGA) or other programmable logic devices, discrete gate or transistor logic devices, discrete hardware components, etc. The general-purpose processor may be a microprocessor or the processor may be any conventional processor, etc.

The apparatus 1300 may further include one or more memories 1320. A program is stored on the memory 1320, which is executable by the processor 1310, so as to cause the processor 1310 to perform the method described in the above method embodiments. The memory 1320 may be independent of or integrated in the processor 1310.

The apparatus 1300 may further include a transceiver 1330. The processor 1310 may communicate with other devices or chips through the transceiver 1330. For example, the processor 1310 may transmit and receive data with other devices or chips through the transceiver 1330.

The embodiments of the present disclosure further provide a computer-readable storage medium for storing a program. The computer-readable storage medium may be applied to a terminal device or a network device provided by the embodiments of the present disclosure, and the program causes a computer to implement the method performed by the terminal device or the network device in various embodiments of the present disclosure.

The embodiments of the present disclosure further provide a computer program product, which includes a program. The computer program product may be applied to the terminal device or the network device provided in the embodiments of the present disclosure, and the program causes a computer to implement the methods performed by the terminal device or the network device in various embodiments of the present disclosure.

The embodiments of the present disclosure further provide a computer program. The computer program may be applied to the terminal device or the network device provided in the embodiments of the present disclosure, and the computer program causes a computer to implement the methods performed by the terminal device or the network device in various embodiments of the present disclosure.

It should be understood that in the embodiments of the present disclosure, "B corresponding to A" indicates that B is associated with A, and B may be determined based on A. But it should also be understood that determining B based on A does not mean determining B solely based on A, and B may also be determined based on A and/or other information.

It should be understood that the term "and/or" herein is only a description of the association relationship between related objects, indicating that there may be three types of relationships, for example, A and/or B may represent the presence of A alone, the presence of A and B simultaneously, and the presence of B alone. In addition, the character '/' herein generally indicates that the associated object is an 'or' relationship.

It should be understood that in various embodiments of the present disclosure, the size of the serial number of the above-mentioned processes does not mean the order of execution, and the order of execution of each process should be determined according to its function and internal logic, and should not constitute any limitation on the implementation process of the embodiments of the present disclosure.

In several embodiments provided by the present disclosure, it should be understood that the disclosed systems, devices and methods may be realized in other ways. For example, the device embodiments described above are only schematic. For example, the division of the units is only a logical function division, and there may be another division method in actual implementation, for example, multiple units or components may be combined or integrated into another system, or some features may be ignored or not implemented. On the other hand, the mutual coupling or direct coupling or communication connection shown or discussed may be indirect coupling or communication connection through some interfaces, devices or units, which may be electrical, mechanical or other forms.

The units described as separate components may or may not be physically separated, the components displayed as units may be or may not be physical units, which may be located in one place or distributed across multiple network units. Some or all of the units may be selected according to actual needs to achieve the objective of the embodiments.

In addition, each functional unit in various embodiments of the present disclosure may be integrated into one processing unit, or each unit may exist physically alone, or two or more units may be integrated into one unit.

In the above embodiments, the disclosed systems, devices and methods may be realized in whole or in part by software, hardware, firmware or any combination thereof. When implemented in software, it may be fully or partially implemented in the form of a computer program product. The computer program product includes one or more computer instructions. When loading and executing the computer program instructions on a computer, all or part of the processes or functions described in the embodiments of the present disclosure are generated. The computer may be a general-purpose computer, a special-purpose computer, a computer network, or other programmable devices. The computer instructions may be stored in a computer-readable storage medium or transmitted from one computer-readable storage medium to another computer-readable storage medium. For example, the computer instructions may be transmitted from one website, computer, server or data center to another website, computer, server or data center by wired (such as coaxial cable, optical fiber, digital subscriber line (DSL)) or wireless (such as infrared, wireless, microwave, etc.). The computer-readable storage medium may be any available medium that the computer can read, or a data storage device such as a server or data center that integrated by one or more available media. The available medium may be a magnetic medium (e.g., floppy disk, hard disk, magnetic tape), an optical medium (e.g., digital video disc (DVD)) or a semiconductor medium (e.g., solid state disk (SSD)) and the like.

The above are only the embodiments of the present disclosure, but the protection scope of the present disclosure is not limited to this. Any person familiar with the technical field can easily think of changes or substitutions within the technical scope disclosed in this disclosure, which should be covered by the protection scope of this disclosure. Therefore, the protection scope of this disclosure should be based on the protection scope of the claims.

## Claims

1. A wireless communication method, comprising:
sending, by a terminal device, a plurality of pieces of reference information to a network device according to configuration information, wherein the plurality of pieces of reference information are related to a transmission delay of the terminal device, and the plurality of pieces of reference information are configured to determine position information of the terminal device.

2. The method according to claim 1, wherein the plurality of pieces of reference information are transmitted in a first transmission manner, and the first transmission manner is that the plurality of pieces of reference information are carried in different messages.

3. The method according to claim 2, wherein the first transmission manner corresponds to first configuration information, and the first configuration information is configured to indicate one or more of: sending time of the reference information, generating time of the reference information, a quantity of times the reference information being sent, content of the reference information, and an accuracy of the reference information.

4. The method according to claim 3, wherein the sending time of the reference information comprises one or both of a sending period, and a total sending duration corresponding to a plurality of times of sending of the reference information.

5. The method according to claim 3 or 4, further comprising:
receiving, by the terminal device, a triggering message sent by the network device, wherein the triggering message is configured to trigger the terminal device to send the plurality of pieces of reference information.

6. The method according to claim 5, wherein the first configuration information is carried in the triggering message.

7. The method according to any one of claims 2 to 6, further comprising:
sending, by the terminal device, ephemeris information configured to generate the reference information and/or a generating time instant of the reference information to the network device.

8. The method according to any one of claims 2 to 7, further comprising:
receiving, by the terminal device, first indication information sent by the network device, wherein the first indication information is configured to instruct to stop sending the reference information.

9. The method according to claim 1, wherein the plurality of pieces of reference information are transmitted in a second transmission manner, and the second transmission manner is that the plurality of pieces of reference information are carried in one message.

10. The method according to claim 9, wherein the second transmission manner corresponds to second configuration information, and the second configuration information is configured to indicate one or more of: a quantity of the pieces of reference information carried in one message, a time window length corresponding to the plurality of pieces of reference information, time of the terminal device obtaining the reference information, a quantity of the pieces of reference information obtained within a preset time window length, content of the reference information, an accuracy of the reference information, and whether the terminal device needs to report second information.

11. The method according to claim 10, wherein the second information comprises one or both of ephemeris information corresponding to the reference information, and a generating time instant of the reference information.

12. The method according to any one of claims 9 to 11, further comprising:
sending, by the terminal device, third information to the network device, wherein the third information comprises one or more of ephemeris information configured to generate the reference information, a correspondence between the ephemeris information and the reference information, and a generating time instant of the reference information.

13. The method according to claim 3 or 10, wherein the content of the reference information comprises one or more of a first transmission delay between the terminal device and a satellite, an uplink transmission timing advance of the terminal device, and a distance between the terminal device and the satellite.

14. The method according to any one of claims 1 to 13, wherein the method further comprises:
receiving, by the terminal device, second indication information sent by the network device in response to the terminal device performing a handover from a first cell to a second cell, wherein the second indication information is configured to indicate one or both of whether to send the reference information to the second cell, and updated configuration information.

15. A wireless communication method, comprising:
receiving, a network device, a plurality of pieces of reference information sent by a terminal device, wherein the plurality of pieces of reference information are sent according to configuration information, are related to a transmission delay of the terminal device, and are configured to determine position information of the terminal device.

16. The method according to claim 15, wherein the plurality of pieces of reference information are transmitted in a first transmission manner, and the first transmission manner is that the plurality of pieces of reference information are carried in different messages.

17. The method according to claim 16, wherein the first transmission manner corresponds to first configuration information, and the first configuration information is configured to indicate one or more of sending time of the reference information, generating time of the reference information, a quantity of times the reference information being sent, content of the reference information, and an accuracy of the reference information.

18. The method according to claim 17, wherein the sending time of the reference information comprises one or both of a sending period, and a total sending duration corresponding to a plurality of times of sending of the reference information.

19. The method according to claim 17 or 18, further comprising:
sending, by the network device, a triggering message to the terminal device, wherein the triggering message is configured to trigger the terminal device to send the plurality of pieces of reference information.

20. The method according to claim 19, wherein the first configuration information is carried in the triggering message.

21. The method according to any one of claims 16 to 20, further comprising:
receiving, by the network device, ephemeris information configured to generate the reference information and/or a generating time instant of the reference information sent by the terminal device.

22. The method according to any one of claims 16 to 21, further comprising:
sending, by the network device, first indication information to the terminal device, wherein the first indication information is configured to instruct to stop sending the reference information.

23. The method according to claim 15, wherein the plurality of pieces of reference information are transmitted in a second transmission manner, and the second transmission manner is that the plurality of pieces of reference information are carried in one message.

24. The method according to claim 23, wherein the second transmission manner corresponds to second configuration information, and the second configuration information is configured to indicate one or more of a quantity of the pieces of reference information carried in one message, a time window length corresponding to the plurality of pieces of reference information, time of the terminal device obtaining the reference information, a quantity of the pieces of reference information obtained within a preset time window length, content of the reference information, an accuracy of the reference information, and whether the terminal device needs to report second information.

25. The method according to claim 24, wherein the second information comprises one or both of ephemeris information corresponding to the reference information, and a generating time instant of the reference information.

26. The method according to any one of claims 23 to 25, further comprising:
receiving, by the network device, third information sent by the terminal device, wherein the third information comprises one or more of ephemeris information configured to generate the reference information, a correspondence between the ephemeris information and the reference information, and a generating time instant of the reference information.

27. The method according to any one of claims 23 to 26, wherein the method further comprises:
obtaining, by a base station corresponding to the second cell and from a first device, ephemeris information configured to generate the reference information by the terminal device in response to the terminal device performing a handover from a first cell to a second cell, wherein the first device comprises one or more of the terminal device, a base station corresponding to the first cell, a network management platform, and a satellite management network element.

28. The method according to claim 17 or 24, wherein the content of the reference information comprises one or more of a first transmission delay between the terminal device and a satellite, an uplink transmission timing advance of the terminal device, and a distance between the terminal device and the satellite.

29. The method according to any one of claims 15 to 28, wherein the method further comprises:
sending, by the network device, second indication information to the terminal device in response to the terminal device performing a handover from a first cell to a second cell, wherein the second indication information is configured to indicate one or both of whether to send the reference information to the second cell, and updated configuration information.

30. A terminal device, comprising:
a sending unit, configured to send a plurality of pieces of reference information to a network device according to configuration information, wherein the plurality of pieces of reference information are related to a transmission delay of the terminal device, and the plurality of pieces of reference information are configured to determine position information of the terminal device.

31. The terminal device according to claim 30, wherein the plurality of pieces of reference information are transmitted in a first transmission manner, and the first transmission manner is that the plurality of pieces of reference information are carried in different messages.

32. The terminal device according to claim 31, wherein the first transmission manner corresponds to first configuration information, and the first configuration information is configured to indicate one or more of sending time of the reference information, generating time of the reference information, a quantity of times the reference information being sent, content of the reference information, and an accuracy of the reference information.

33. The terminal device according to claim 32, wherein the sending time of the reference information comprises one or both of a sending period, and a total sending duration corresponding to a plurality of times of sending of the reference information.

34. The terminal device according to claim 32 or 33, further comprising:
a receiving unit, configured to receive a triggering message sent by the network device, wherein the triggering message is configured to trigger the terminal device to send the plurality of pieces of reference information.

35. The terminal device according to claim 34, wherein the first configuration information is carried in the triggering message.

36. The terminal device according to any one of claims 31 to 35, wherein the sending unit is further configured to:
send ephemeris information used to generate the reference information and/or a generating time instant of the reference information to the network device.

37. The terminal device according to any one of claims 31 to 36, further comprising:
a receiving unit, configured to receive first indication information sent by the network device, wherein the first indication information is configured to instruct to stop sending the reference information.

38. The terminal device according to claim 30, wherein the plurality of pieces of reference information are transmitted in a second transmission manner, and the second transmission manner is that the plurality of pieces of reference information are carried in one message.

39. The terminal device according to claim 38, wherein the second transmission manner corresponds to second configuration information, and the second configuration information is configured to indicate one or more of a quantity of the pieces of reference information carried in one message, a time window length corresponding to the plurality of pieces of reference information, time of the terminal device obtaining the reference information, a quantity of the pieces of reference information obtained within a preset time window length, content of the reference information, an accuracy of the reference information, and whether the terminal device needs to report second information.

40. The terminal device according to claim 39, wherein the second information comprises one or both of ephemeris information corresponding to the reference information, and a generating time instant of the reference information.

41. The terminal device according to any one of claims 38 to 40, wherein the sending unit is further configured to:
send third information to the network device, wherein the third information comprises one or more of ephemeris information used to generate the reference information, a correspondence between the ephemeris information and the reference information, and a generating time instant of the reference information.

42. The terminal device according to claim 32 or 39, wherein the content of the reference information comprises one or more of a first transmission delay between the terminal device and a satellite, an uplink transmission timing advance of the terminal device, and a distance between the terminal device and the satellite.

43. The terminal device according to any one of claims 30 to 42, wherein the terminal device further comprises:
a receiving unit, configured to receive second indication information sent by the network device in response to the terminal device performing a handover from a first cell to a second cell, wherein the second indication information is configured to indicate one or both of whether to send the reference information to the second cell, and updated configuration information.

44. A network device, comprising:
a receiving unit, configured to receive a plurality of pieces of reference information sent by a terminal device, wherein the plurality of pieces of reference information are sent according to configuration information, are related to a transmission delay of the terminal device, and are configured to determine position information of the terminal device.

45. The network device according to claim 44, wherein the plurality of pieces of reference information are transmitted in a first transmission manner, and the first transmission manner is that the plurality of pieces of reference information are carried in different messages.

46. The network device according to claim 45, wherein the first transmission manner corresponds to first configuration information, and the first configuration information is configured to indicate one or more of sending time of the reference information, generating time of the reference information, a quantity of times the reference information being sent, content of the reference information, and an accuracy of the reference information.

47. The network device according to claim 46, wherein the sending time of the reference information comprises one or both of a sending period, and a total sending duration corresponding to a plurality of times of sending of the reference information.

48. The network device according to claim 46 or 47, further comprising:
a sending unit, configured to send a triggering message to the terminal device, wherein the triggering message is configured to trigger the terminal device to send the plurality of pieces of reference information.

49. The network device according to claim 48, wherein the first configuration information is carried in the triggering message.

50. The network device according to any one of claims 45 to 49, wherein the receiving unit is further configured to:
receive ephemeris information configured to generate the reference information and/or a generating time instant of the reference information sent by the terminal device.

51. The network device according to any one of claims 45 to 50, further comprising:
a sending unit, configured to send first indication information to the terminal device, wherein the first indication information is configured to instruct to stop sending the reference information.

52. The network device according to claim 44, wherein the plurality of pieces of reference information are transmitted in a second transmission manner, and the second transmission manner is that the plurality of pieces of reference information are carried in one message.

53. The network device according to claim 52, wherein the second transmission manner corresponds to second configuration information, and the second configuration information is configured to indicate one or more of a quantity of the pieces of reference information carried in one message, a time window length corresponding to the plurality of pieces of reference information, time of the terminal device obtaining the reference information, a quantity of the pieces of reference information obtained within a preset time window length, content of the reference information, an accuracy of the reference information, and whether the terminal device needs to report second information.

54. The network device according to claim 53, wherein the second information comprises one or both of ephemeris information corresponding to the reference information, and a generating time instant of the reference information.

55. The network device according to any one of claims 52 to 54, wherein the receiving unit is further configured to:
receive third information sent by the terminal device, wherein the third information comprises one or more of ephemeris information configured to generate the reference information, a correspondence between the ephemeris information and the reference information, and a generating time instant of the reference information.

56. The network device according to any one of claims 52 to 55, wherein the network device further comprises:
an obtaining unit, configured to obtain, from a first device, ephemeris information used to generate the reference information by the terminal device in response to the terminal device performing a handover from a first cell to a second cell, wherein the first device comprises one or more of the terminal device, a base station corresponding to the first cell, a network management platform, and a satellite management network element.

57. The network device according to claim 46 or 53, wherein the content of the reference information comprises one or more of a first transmission delay between the terminal device and a satellite, an uplink transmission timing advance of the terminal device, and a distance between the terminal device and the satellite.

58. The network device according to any one of claims 44 to 57, wherein the network device further comprises:
a sending unit, configured to send second indication information to the terminal device in response to the terminal device performing a handover from a first cell to a second cell, wherein the second indication information is configured to indicate one or both of whether to send the reference information to the second cell, and updated configuration information.

59. A terminal device comprising a memory, a processor and a communication interface, wherein the memory is configured to store programs, and the processor is configured to call the programs in the memory to cause the terminal device to perform the method according to any one of claims 1 to 14.

60. A network device comprising a memory, a processor and a communication interface, wherein the memory is configured to store programs, and the processor is configured to call the programs in the memory to cause the network device to perform the method according to any one of claims 15 to 29.

61. An apparatus comprising a processor configured to call programs in a memory to perform the method according to any one of claims 1 to 14 or 15 to 29.

62. A chip comprising a processor configured to call programs in a memory to cause a device equipped with the chip to perform the method according to any one of claims 1 to 14 or 15 to 29.

63. A computer-readable storage medium storing programs for causing a computer to perform the method according to any one of claims 1 to 14 or 15 to 29.
